# EUROPÄISCHE PATENTSCHRIFT

(11) **EP 1 891 474 B1**
(45) Veröffentlichungstag und Bekanntmachung des Hinweises auf die Patenterteilung: **15.11.2017**
(21) Anmeldenummer: 06761922.1
(22) Anmeldetag: 20.05.2006
(51) Int. Cl.: G02B 6/44

(54) **LICHTWELLENLEITERVERTEILEREINRICHTUNG**
OPTICAL WAVEGUIDE DISTRIBUTION DEVICE
DISPOSITIF DE DISTRIBUTION DE FIBRES OPTIQUES

(30) Priorität: 11.06.2005 DE 202005009182 U
(43) Veröffentlichungstag der Anmeldung: 27.02.2008
(73) Patentinhaber: CCS Technology, Inc., Wilmington, DE 19803 (US)
(72) Erfinder: FRÖHLICH, Franz-Friedrich, 58091 Hagen (DE); FEILER, Gerhard, 58099 Hagen (DE); SULLIVAN, Keith, Kent, TN13 1 SN (GB)
(74) Vertreter: Sturm, Christoph
(86) Internationale Anmeldenummer: PCT/EP2006/004807
(87) Internationale Veröffentlichungsnummer: WO 2006/133787

(56) Entgegenhaltungen:
- EP-A- 0 288 808
- EP-A- 0 490 609
- EP-A- 0 538 164
- EP-A- 0 585 809
- US-A- 5 511 144
- US-A1- 2005 111 809

## Beschreibung

Die Erfindung betrifft eine Lichtwellenleiterverteilereinrichtung nach dem Oberbegriff des Anspruchs 1.

Zum Beispiel in Verteilerschränken für Lichtwellenleiterkabel kommen Verteilereinrichtungen zum Einsatz, wie sie aus dem Produktkatalog "Zubehör für LWL-Kabelnetze, Ausgabe 2, Seite 227, Jahr 2002, Corning Cable Systems GmbH & Co. KG" bekannt sind. Die dort gezeigte Lichtwellenleiterverteilereinrichtung verfügt über ein in einem Rahmen bzw. einem Gehäuse schubladenartig montiertes bzw. gelagertes Verteilerfeld, wobei das Verteilerfeld eine Vorderwand, eine Rückwand, zwei sich zwischen der Vorderwand und der Rückwand erstreckende Seitenwände sowie eine Bodenwand aufweist. Im Bereich der Vorderwand des Verteilerfelds sind Kupplungen positioniert, wobei die Kupplungen sowohl an einer Außenseite als auch an einer Innenseite der Vorderwand des Verteilerfelds ausgebildet sind, so dass sowohl ausgehend von der Außenseite der Vorderwand als auch ausgehend von der Innenseite der Vorderwand Stecker von Lichtwellenleitern in die Kupplungen eingesteckt werden können. Bei einer derartigen Lichtwellenleiterverteilereinrichtung sind üblicherweise von der Innenseite der Vorderwand aus Lichtwellenleiter, die an einem Ende mit einem Stecker vorkonfektioniert sind, über den Stecker in die Kupplungen eingesteckt, wobei freie Enden dieser Lichtwellenleiter in mindestens einer Spleißkassette des Verteilerfelds abgelegt sind. Über die Rückwand des Verteilerfelds ist in die Verteilereinrichtung ein Lichtwellenleiterkabel mit weiteren Lichtwellenleitern einführbar, wobei die Lichtwellenleiter des Lichtwellenleiterkabels mit den Lichtwellenleitern, die über Stecker von der Innenseite her in die Kupplungen der Vorderwand eingesteckt sind, verspleißt werden können. Zwischen diesen Lichtwellenleitern ausgebildete Spleiße werden in einer Spleißkassette abgelegt, die nach dem Stand der Technik mit der Bodenwand des Verteilerfelds verbunden ist. Sollen bei einer derartigen Lichtwellenleiterverteilereinrichtung Spleiße zwischen miteinander zu verbindenden Lichtwellenleitern ausgebildet werden, so hat es sich als problematisch erwiesen, dass die Lichtwellenleiter zu Spleißarbeiten relativ schlecht zugänglich sind, was vor allem dann der Fall ist, wenn im Verteilerfeld mehrere Spleißkassetten übereinander gestapelt sind.

Aus der US 2005/0111809 A1 ist eine Verteilereinrichtung mit den Merkmalen des Oberbegriffs des Patentanspruchs 1 bekannt. Weitere Lichtwellenleiterverteilereinrichtungen sind aus der US 5,511,144, der EP 0 538 164 A1 sowie aus der EP 0 585 809 A1 bekannt.

Hiervon ausgehend liegt der vorliegenden Erfindung das Problem zu Grunde, eine neuartige Lichtwellenleiterverteilereinrichtung zu schaffen. Dieses Problem wird durch eine Lichtwellenleiterverteilereinrichtung mit den Merkmalen des Anspruchs 1 gelöst.

Im Sinne der hier vorliegenden Erfindung wird vorgeschlagen, die oder jede Spleißkassette sowie die Vorderwand lösbar mit dem Verteilerfeld zu verbinden, so dass die Vorderwand zusammen mit der oder jeder im Bereich der Vorderwand aufgenommenen Spleißkassette gegenüber dem Verteilerfeld versetzt bzw. umplatziert werden kann. Hierdurch wird gewährleistet, dass die Lichtwellenleiter zu Spleißarbeiten leichter zugänglich sind.

Bevorzugte Weiterbildungen der Erfindung ergeben sich aus den Unteransprüchen und der nachfolgenden Beschreibung. Ausführungsbeispiele werden anhand der Zeichnung näher erläutert. In der Zeichnung zeigt:
- Fig. 1: eine Lichtwellenleiterverteilereinrichtung im Sinne der hier vorliegenden Erfindung in perspektivischer Seitenansicht;
- Fig. 2: die erfindungsgemäße Lichtwellenleiterverteilereinrichtung der Fig. 1 mit einer gegenüber Fig. 1 versetzten Spleißkassette; und
- Fig. 3: die erfindungsgemäße Lichtwellenleiterverteilereinrichtung der Fig. 1 und 2 mit einer gegenüber Fig. 1 und 2 versetzten Spleißkassette und einer ebenfalls versetzten Vorderwand.

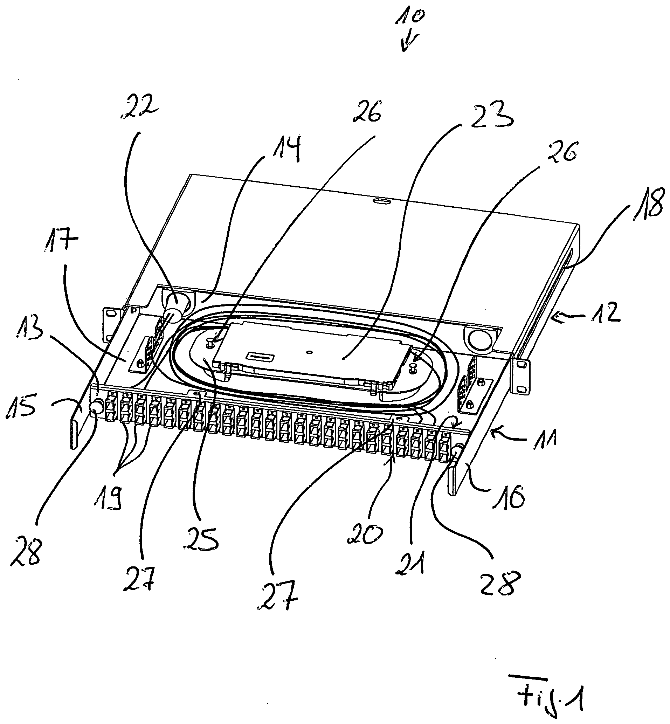

Nachfolgend wird die hier vorliegende Erfindung unter Bezugnahme auf Fig. 1 bis 3 in größerem Detail beschrieben.

Fig. 1 bis 3 zeigen eine erfindungsgemäße Lichtwellenleiterverteilereinrichtung 10 mit einem Verteilerfeld 11, welches schubladenartig in einem Rahmen bzw. Gehäuse 12 montiert ist. Das Verteilerfeld 11 verfügt über eine Vorderwand 13, eine Rückwand 14, sich zwischen der Vorderwand 13 und der Rückwand 14 erstreckende Seitenwände 15 und 16 sowie eine Bodenwand 17. Das gesamte Verteilerfeld 11 kann im Sinne einer Schublade aus dem Gehäuse 12 herausgezogen werden, wobei zur Führung dieser schubladenartigen Relativbewegung zwischen dem Verteilerfeld 11 und dem Gehäuse 12 den Seitenwänden 15 und 16 des Verteilerfelds 11 nicht-dargestellte Führungsstifte zugeordnet sind, die in Führungsschlitze 18 des Gehäuses 12 eingreifen, wobei die Führungsschlitze 18 des Gehäuses 12 sich in etwa parallel zu den Seitenwänden 15 und 16 des Verteilerfelds 11 erstrecken.

Der Vorderwand 13 des Verteilerfelds 11 sind mehrere Kupplungen 19 zugeordnet, wobei die Kupplungen 19 sowohl im Bereich einer Außenseite 20 der Vorderwand 13 als auch im Bereich einer Innenseite 21 der Vorderwand 13 ausgebildet sind. In die im Bereich der Außenseite 20 sowie der Innenseite 21 der Vorderwand 13 ausgebildeten Kupplungen 19 können Stecker von vorkonfektionierten Lichtwellenleitern eingeführt werden, wobei solche mit Steckern vorkonfektionierte Lichtwellenleiter entweder als "Pigtails" oder "Patch Cords" bezeichnet werden.

Im gezeigten Ausführungsbeispiel der Fig. 1 bis 3 sind in die im Bereich der Innenseite 21 der Vorderwand 13 positionierten Kupplungen 19 Stecker von als Pigtails ausgeführten ersten Lichtwellenleitern eingesteckt, wobei diese ersten Lichtwellenleiter an einem den Steckern gegenüberliegenden Ende steckerlos ausgeführt sind. Über die Rückwand 14 ist in eine solche Lichtwellenleiterverteilereinrichtung 10 ein Lichtwellenleiterkabel 22 mit mehreren zweiten Lichtwellenleitern einführbar, wobei die zweiten Lichtwellenleiter des Lichtwellenleiterkabels 22 mit den freien Enden der ersten Lichtwellenleiter, die an ihren gegenüberliegenden Enden über Stecker in die an der Innenseite 21 der Vorderwand 13 ausgebildeten Kupplungen 19 eingesteckt sind, verspleißt werden. Hierbei ausgebildete Spleiße werden in mindestens einer Spleißkassette 23 des Verteilerfelds 11 abgelegt, wobei Überlängen der zweiten Lichtwellenleiter des Lichtwellenleiterkabels 22 im Bereich eines durch Führungselemente 24 des Verteilerfelds 11 gebildeten Überlängenspeichers abgelegt werden. Im Ausführungsbeispiel der Fig. 1 bis 3 ist lediglich eine Spleißkassette 23 dargestellt, die erfindungsgemäße Lichtwellenleiterverteilereinrichtung 10 bzw. das Verteilerfeld 11 kann jedoch auch mehrere übereinander gestapelte Spleißkassetten 23 aufweisen.

Im Sinne der hier vorliegenden Erfindung wird nun vorgeschlagen, dass die Spleißkassette 23 lösbar mit dem Verteilerfeld 11 verbunden ist, nämlich derart, dass die Spleißkassette 23 zusammen mit den in der Spleißkassette 23 abgelegten Spleißen gegenüber dem Verteilerfeld 11 versetzt bzw. umplatziert werden kann. Im gezeigten Ausführungsbeispiel ist die Spleißkassette 23 bzw. ein Stapel von Spleißkassetten 23 auf einer Trägerplatte 25 gelagert bzw. befestigt, wobei die Spleißkassette 23 zusammen mit der Trägerplatte 25 gegenüber dem Verteilerfeld 11 versetzt bzw. umplatziert werden kann. Der Trägerplatte 25 sind hierzu Verriegelungselemente 26 zugeordnet, über welche die Trägerplatte 25 und damit die Spleißkassette 23 in der in Fig. 1 dargestellten Position mit den Führungselementen 24 im Bereich der Bodenwand 17 des Verteilerfelds 11 verankert bzw. lösbar verbunden ist. Die Verriegelungselemente 26 sind dabei vorzugsweise als sogenannten Push/Pull-Verriegelungen ausgeführt.

Nach dem Lösen der Verriegelungen 26 kann die Trägerplatte 25 zusammen mit der oder jeder auf der Trägerplatte 25 befestigten Spleißkassette 23 gegenüber dem Verteilerfeld 11 umplatziert werden, nämlich derart, dass die Trägerplatte 25 und damit die oder jede Spleißkassette 23 auf die Vorderwand 13 des Verteilerfelds 11 aufgesteckt wird. Hierzu verfügt die Vorderwand 13 des Verteilerfelds 11 im Bereich einer Oberkante über Halteelemente 27, die zur Aufnahme der Trägerplatte 25 im Bereich der Vorderwand 13 mit den Verriegelungselementen 26 zusammenwirken.

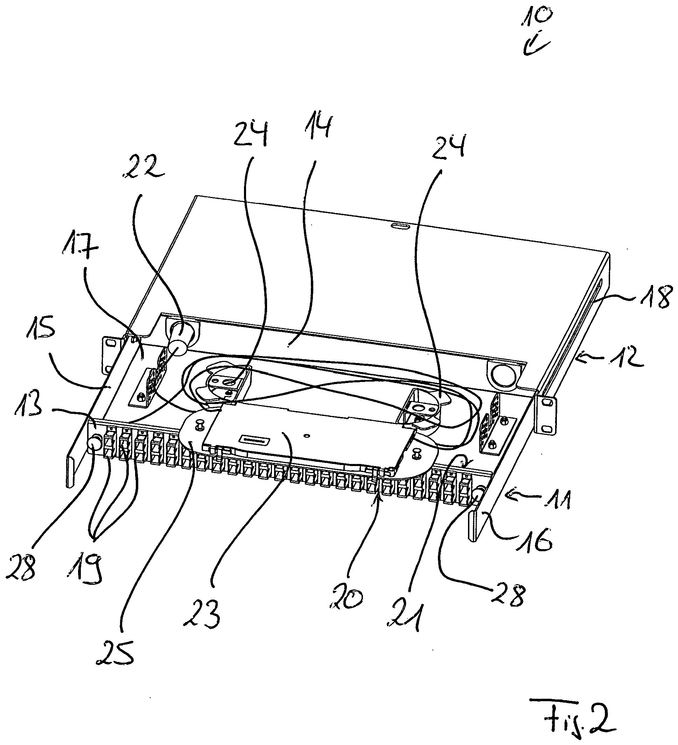

Es liegt demnach im Sinne der hier vorliegenden Erfindung, nach dem Lösen der oder jeder Spleißkassette 23 aus der in Fig. 1 gezeigten Position die oder jede Spleißkassette in die in Fig. 2 gezeigte Position zu überführen und dabei im Bereich der Vorderwand 13 des Verteilerfelds 11 zu positionieren. Hierdurch werden die im Bereich des durch die Führungselemente 24 gebildeten Überlängenspeichers geführten bzw. abgelegten Überlängen der zweiten Lichtwellenleiter des Lichtwellenleiterkabels 22 leicht bzw. gut zugänglich gemacht.

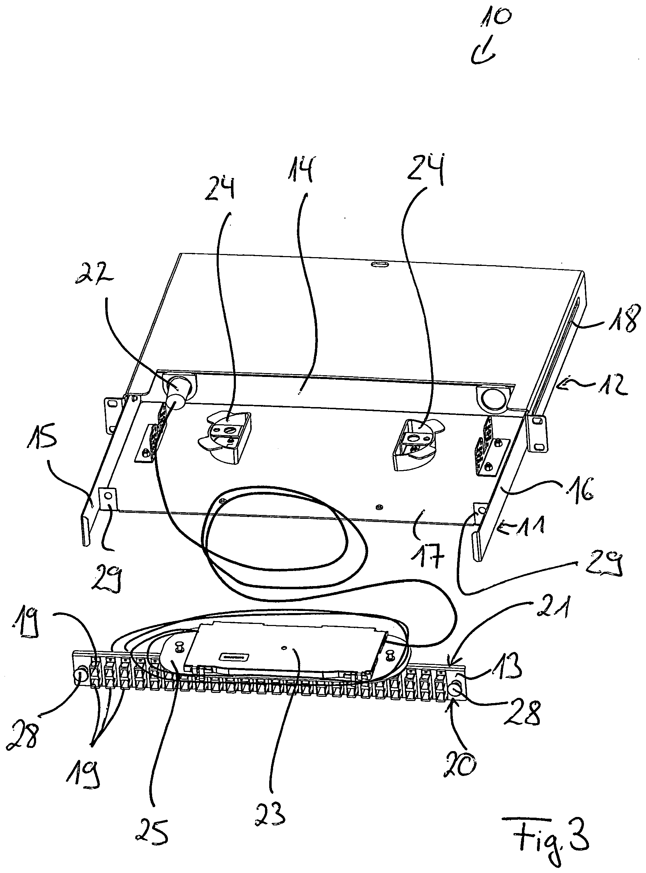

Im Sinne der hier vorliegenden Erfindung ist weiterhin die Vorderwand 13 des Verteilerfelds 11 lösbar mit demselben verbunden, so dass die Vorderwand 13 gegenüber dem Verteilerfeld 11 versetzt bzw. umplatziert werden kann. Im gezeigten Ausführungsbeispiel der Fig. 1 bis 3 ist die Vorderwand 13 über Verriegelungselemente 28 mit Halteabschnitten 29 lösbar verbunden, wobei die Halteabschnitte 29 vorzugsweise Bestandteil der Seitenwände 15 und 16 bzw. Bestandteil der Bodenwand 17 sind. Die Verriegelungselemente 28 sind ebenso wie die Verriegelungselemente 26 wiederum vorzugsweise als sogenannte Push/Pull-Verriegelungen ausgeführt, wobei nach Lösen der Verriegelungselemente 28 die Vorderwand 13 vorzugsweise zusammen mit der auf die Vorderwand 13 aufgesteckten Spleißkassette 23 (siehe Fig. 3) relativ zum Verteilerfeld 11 versetzt bzw. umplatziert werden kann. Hierdurch werden Lichtwellenleiter zu Spleißarbeiten besonders leicht zugänglich. Durch das gemeinsame Versetzen der Vorderwand 13 mit der oder jeder auf die Vorderwand 13 aufgesetzten bzw. aufgesteckten Spleißkassette 23 ist es möglich, zu verbindende Lichtwellenleiter auch zu einem relativ weit entfernten Spleißgerät zu führen, ohne dass eine Beschädigungsgefahr an den mit Steckern konfektionierten Pigtails besteht.

Im Sinne der hier vorliegenden Erfindung wird demnach eine Lichtwellenleiterverteilereinrichtung 10 vorgeschlagen, bei welcher sich eine Spleißkassette 23 oder ein Stapel von Spleißkassetten 23 gegenüber dem Verteilerfeld 11 der Lichtwellenleiterverteilereinrichtung 10 versetzen lässt. Die Spleißkassette 23 bzw. der Stapel von Spleißkassetten 23 findet dabei Aufnahme auf einer Vorderwand 13 des Verteilerfelds 11, wobei die Vorderwand 13 zusammen mit der Spleißkassette 23 bzw. den Spleißkassettenstapel gegenüber dem Verteilerfeld 11 umgesetzt bzw. umplatziert werden kann. Bei auf die Vorderwand 13 aufgesteckten Spleißkassetten 23 bleiben die mit Steckern vorkonfektionierten ersten Lichtwellenleiter, die zwischen der Vorderwand 13 und den Spleißkassetten 23 verlaufen, beim Umplatzieren fast vollständig unbeeinflusst, lediglich die über das Lichtwellenleiterkabel 22 eingeführten, zweiten Lichtwellenleiter müssen zum Umplatzieren bzw. Versetzen mit einer entsprechenden Überlänge ausgestattet sein.

### Bezugszeichenliste

- 10: Lichtwellenleiterverteilereinrichtung
- 11: Verteilerfeld
- 12: Gehäuse
- 13: Vorderwand
- 14: Rückwand
- 15: Seitenwand
- 16: Seitenwand
- 17: Bodenwand
- 18: Führungsschlitz
- 19: Kupplung
- 20: Außenseite
- 21: Innenseite
- 22: Lichtwellenleiterkabel
- 23: Spleißkassette
- 24: Führungselement
- 25: Tragplatte
- 26: Verriegelungselement
- 27: Halteelement
- 28: Verriegelungselement
- 29: Halteabschnitt

## Patentansprüche

1. Lichtwellenleiterverteilereinrichtung, mit einem Verteilerfeld (11), wobei das Verteilerfeld (11) Führungselemente (24) für Lichtwellenleiter aufweist, die einen Überlängenspeicher begrenzen, wobei das Verteilerfeld (11) zumindest eine Bodenwand (17) und eine Vorderwand (13) aufweist, wobei an der Vorderwand (13) des Verteilerfelds (11) mehrere Kupplungen (19) für Stecker von ersten Lichtwellenleitern positioniert sind, und wobei das Verteilerfeld (11) mindestens eine Spleißkassette (23) zur Ablage von Spleißen zwischen den ersten Lichtwellenleitern und über ein Kabel (22) in das Verteilerfeld (11) eingeführten zweiten Lichtwellenleitern aufweist, **dadurch gekennzeichnet, dass**
a) die oder jede Spleißkassette (23) über Verriegelungselemente (26) mit den auf der Bodenwand (17) des Verteilerfelds (11) positionierten Führungselementen (24) für Lichtwellenleiter lösbar verbunden ist, derart, dass die oder jede Spleißkassette (23) sowohl im Bereich der Bodenwand (17) des Verteilerfelds (11) auf den Führungselementen (24) als auch auf der Vorderwand (13) des Verteilerfelds (11) platzierbar ist, wobei zur Aufnahme der oder jeder Spleißkassette (23) die Vorderwand (13) des Verteilerfelds (11), an welcher die Kupplungen (19) positioniert sind, an einer Oberkante Haltelemente (27) aufweist;
b) auch die Vorderwand (13) des Verteilerfelds (11) lösbar mit demselben verbunden ist, derart, dass die Vorderwand (13) zusammen mit der oder jeder von der Vorderwand (13) aufgenommenen Spleißkassette (23) und den in der oder jeder Spleißkassette (23) abgelegten Spleißen gegenüber der Bodenwand (17) des Verteilerfelds (11) versetzbar bzw. umplatzierbar ist.

2. Lichtwellenleiterverteilereinrichtung nach Anspruch 1, **dadurch gekennzeichnet, dass** zur Aufnahme der oder jeder Spleißkassette (23) an der Vorderwand (13) des Verteilerfelds (11) die Verriegelungselemente (26) mit den im Bereich der Oberkante der Vorderwand (13) des Verteilerfelds (11) positionierten Haltelementen (27) zusammenwirken.

3. Lichtwellenleiterverteilereinrichtung nach Anspruch 1 oder 2, **dadurch gekennzeichnet, dass** die Vorderwand (13) über Verriegelungselemente (28) mit Seitenwänden (15, 16) oder der Bodenwand (17) des Verteilerfelds (11) lösbar verbunden ist.

4. Lichtwellenleiterverteilereinrichtung nach einem der Ansprüche 1 bis 3, **dadurch gekennzeichnet, dass** die oder jede Spleißkassette (23) auf einer Trägerplatte (25) gelagert bzw. befestigt sind, wobei die oder jede Spleißkassette (23) zusammen mit der Trägerplatte (25) gegenüber dem Verteilerfeld (11) versetzbar bzw. umplatzierbar ist.

5. Lichtwellenleiterverteilereinrichtung nach Anspruch 4, **dadurch gekennzeichnet, dass** die Verriegelungselemente (26), über welche die oder jede Spleißkassette lösbar mit der Bodenwand (17) oder den Führungselementen (24) verbunden ist, der Trägerplatte (25) zugeordnet sind.

## Claims

1. Optical waveguide distribution device comprising a distribution panel (11), the distribution panel (11) having guiding elements (24) for optical waveguides which delimit an excess length store, the distribution panel (11) having at least a base wall (17) and a front wall (13), a plurality of couplings (19) for plugs of first optical waveguides being positioned on the front wall (13) of the distribution panel (11), and the distribution panel (11) having at least one splice cassette (23) for placing splices between the first optical waveguides and second optical waveguides which are introduced into the distribution panel (11) via a cable (22), **characterized in that**
a) the or each splice cassette (23) is removably connected via locking elements (26) to the guiding elements (24) for optical waveguides, said guiding elements (24) being positioned on the base wall (17) of the distribution panel (11), in such a manner that the or each splice casette (23) is able to be placed both in the region of the base wall (17) of the distribution panel (11) on the guiding elements (24) and on the front wall (13) of the distribution panel (11), the front wall (13) of the distribution panel (11), on which the couplings (19) are positioned, having holding elements (27) on a top edge in order to accommodate the or each splice cassette (23);
b) the front wall (13) of the distribution panel (11) is also removably connected to the same in such a manner that the front wall (13) can be displaced or repositioned relative to the base wall (17) of the distribution panel (11) together with the or each splice cassette (23) accommodated by the front wall (13) and the splices placed in the or each splice cassette (23).

2. Optical waveguide distribution device according to Claim 1, **characterized in that** the locking elements (26) interact with the holding elements (27) positioned in the region of the top edge of the front wall (13) of the distribution panel (11), in order to accommodate the or each splice cassette (23) on the front wall (13) of the distribution panel (11).

3. Optical waveguide distribution device according to Claim 1 or 2, **characterized in that** the front wall (13) is removably connected to side walls (15, 16) or the base wall (17) of the distribution panel (11) via locking elements (28).

4. Optical waveguide distribution device according to one of Claims 1 to 3, **characterized in that** the or each splice cassette (23) is stored on or fixed to a carrier plate (25), it being possible for the or each splice cassette (23) together with the carrier plate (25) to be displaced or repositioned relative to the distribution panel (11).

5. Optical waveguide distribution device according to Claim 4, **characterized in that** the locking elements (26), via which the or each splice cassette (23) is removably connected with the base wall (17) or the guiding elements (24), are assigned to the carrier plate (25).

## Revendications

1. Dispositif de distribution de fibres optiques, comportant un champ de distribution (11), dans lequel le champ de distribution (11) comporte des éléments de guidage (24) pour des fibres optiques qui délimitent un accumulateur de prolongation, dans lequel le champ de distribution (11) comporte au moins une paroi de fond (17) et une paroi avant (13), dans lequel plusieurs éléments d'accouplement (19) sont positionnés sur la paroi avant (13) du champ de distribution (11) pour des connecteurs de premières fibres optiques, et dans lequel le champ de distribution (11) comporte au moins une cassette d'épissure (23) pour la mise en place d'épissures entre les premières fibres optiques et des secondes fibres optiques introduites par l'intermédiaire d'un câble (22) dans le champ de distribution (11), **caractérisé en ce que**
a) la ou chaque cassette d'épissure (23) est reliée de manière amovible par l'intermédiaire d'éléments de verrouillage (26) aux éléments de guidage (24) de fibres optiques, positionnés sur la paroi de fond (17) du champ de distribution (11) de manière à ce que la ou chaque cassette d'épissure (23) puisse être placée aussi bien dans la région de la paroi de fond (17) du champ de distribution (11) sur les éléments de guidage (24) que sur la paroi avant (13) du champ de distribution (11), dans lequel la paroi avant (13) du champ de distribution (11) sur laquelle sont positionnés les éléments d'accouplement (19) comporte sur un bord supérieur des éléments de retenue (27) permettant de recevoir la ou chaque cassette d'épissure (23) ;
b) la paroi avant (13) du champ de distribution (11) est elle aussi reliée de manière amovible au champ de distribution, de manière telle que la paroi avant (13) peut être décalée ou déplacée en association avec la ou chaque cassette d'épissure (23) reçue par la paroi avant (13) et avec les épissures disposées dans la ou chaque cassette d'épissure (23), par rapport à la paroi de fond (17) du champ de distribution (11).

2. Dispositif de distribution de fibres optiques selon la revendication 1, **caractérisé en ce que** les éléments de verrouillage (26) coopèrent avec les éléments de retenue (27) positionnés dans la région du bord supérieur de la paroi avant (13) du champ de distribution (11) pour recevoir la ou chaque cassette d'épissure (23) sur la paroi avant (13) du champ de distribution (11).

3. Dispositif de distribution de fibres optiques selon la revendication 1 ou 2, **caractérisé en ce que** la paroi avant (13) est reliée de manière amovible par l'intermédiaire d'éléments de verrouillage (28) à des parois latérales (15, 16) ou à la paroi de fond (17) du champ de distribution (11).

4. Dispositif de distribution de fibres optiques selon l'une quelconque des revendications 1 à 3, **caractérisé en ce que** la ou chaque cassette d'épissure (23) est montée ou fixée sur une plaque de support (25), dans lequel la ou chaque cassette d'épissure (23) peut être décalée ou déplacée en association avec la plaque de support (25) par rapport au champ de distribution (11).

5. Dispositif de distribution de fibres optiques selon la revendication 4, **caractérisé en ce que** les éléments de verrouillage (26) par l'intermédiaire desquels la ou chaque cassette d'épissure est reliée de manière amovible à la paroi de fond (17) ou aux éléments de guidage (24), sont associés à la plaque de support (25).
